# EUROPEAN PATENT APPLICATION

(11) **EP 1 594 210 A1**
(43) Date of publication of application: **09.11.2005**
(21) Application number: 05103780.2
(22) Date of filing: 05.05.2005
(51) Int. Cl.: H02J 9/06, H02M 1/10

(54) **Power supply for portable printer**

(30) Priority: 06.05.2004 KR 2004031769
(71) Applicant: SAMSUNG ELECTRONICS CO., LTD., Suwon-si, Gyeonggi-Do 442-742 (KR)
(72) Inventor: Ryu, Han-chung, Seongnam-si, Gyeonggi-do (KR)
(74) Representative: Geary, Stuart Lloyd

(57) **Abstract**

A power supply for a portable printer, including an apparatus generating a main driving voltage and a driving voltage for driving a portable printer using the external alternating current voltage if an external alternating current voltage is applied, and which generates a main driving voltage and a driving voltage for driving the portable printer using an internal battery in the portable printer if no external alternating current voltage is applied. The power supply includes the reference DC voltage being lower than the first voltage. By lowering the reference DC voltage of the power supply, it is possible to substitute various circuit devices included in the power supply with low-cost components, thereby reducing a cost of the power supply.

## Description

The present invention relates to a power supply system for a portable printer, the system comprising a voltage source means.

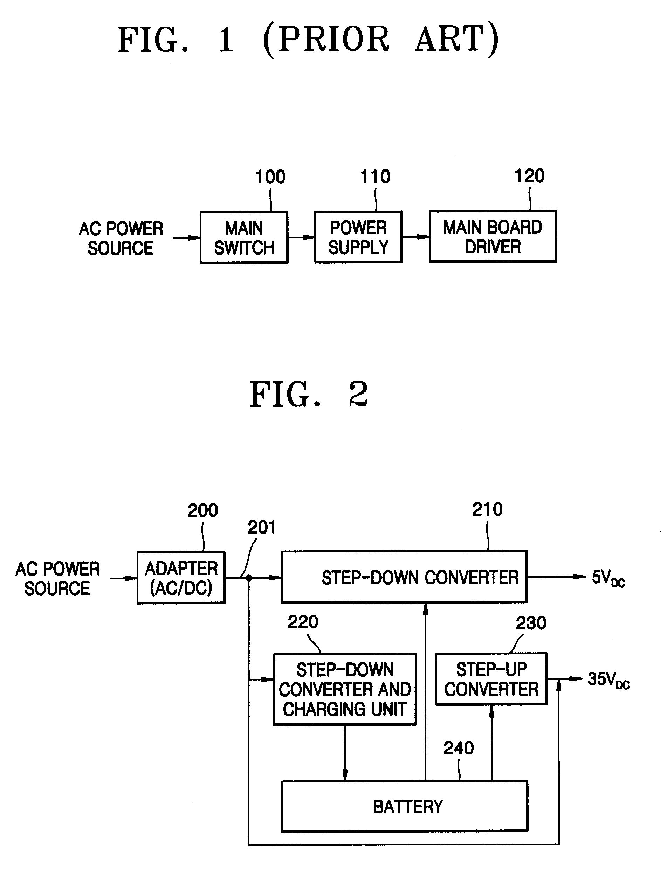

Figure 1 shows the structure of a conventional power supply for a printer. The power supply includes a main switch 100, a power supplying unit 110 and a main board driver 120.

Referring to Figure 1, when the main switch 100 is closes, an alternating current (AC) voltage is supplied to the power supplying unit 110. The power supplying unit 110 converts the AC voltage, received through the main switch 100, into various direct current (DC) voltages, required for driving the printer, and outputs the DC voltages to the main board driver 120. The main board driver 120 is operated by a DC voltage applied from the power supplying unit 110, receives print data from a computer and prints the print data on paper.

KR-A-1992-009018 sets forth another conventional technique including an adapter and high-speed charging device combination having a regulator for converting an AC input voltage into a predetermined DC voltage according to a load. KR-A-1998-036816 further discloses a method for managing the voltage of a printer, wherein the printer includes a power supplying unit for converting an AC voltage, received through a main switch, into DC voltages of +5V, -5V, +12V, and -12V, a data detector and a backup battery.

However, the power supplies from these above-mentioned conventional techniques use a high reference DC voltage.

A power supply system, according to the present invention, is characterised by voltage step-up means for stepping up the output voltage of the voltage source means and voltage step-down means for stepping down the output voltage of the voltage source means.

The voltage source means comprises a battery and/or means for producing a DC voltage from an AC voltage.

The system may include charging means for charging the battery from means for producing a DC voltage from an AC voltage.

The system may include means for producing a DC voltage from an AC voltage, a further voltage step-down means and a battery charging means. The output of the means for producing a DC voltage from an AC voltage may be connected to the inputs of both of the voltage step-down means and the further voltage step-down means and the battery charging means may be configured for charging said battery.

According to the present invention, there is also provided a portable printer including a system according to the present invention.

Additional preferred and optional features of the present invention are set forth in claims 7 to 22 appended hereto.

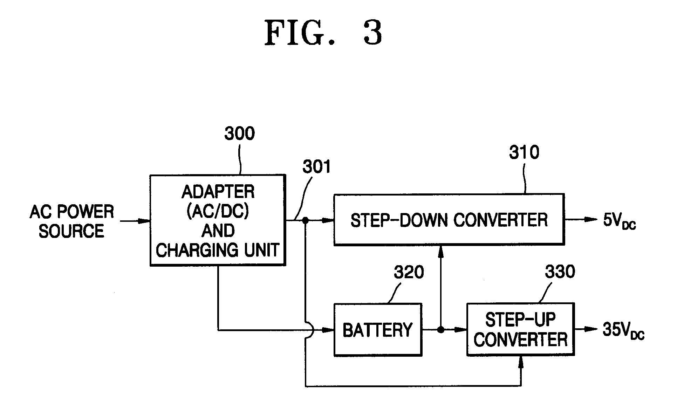

Embodiments of the present invention will now be described, by way of example, with reference to Figures 2 and 3 of the accompanying drawings, which:
Figure 1 illustrates a conventional power supply for a printer;
Figure 2 illustrates a power supply for a portable printer, according to the present invention; and
Figure 3 illustrates another power supply for a portable printer, according to the present invention.

Referring to Figure 2, a power supply for a portable printer includes an adapter 200, a step-down converter 210, a step-down converter and charging unit 220, a step-up converter 230 and a battery 240.

The adapter 200 rectifies and smoothes an alternating current (AC) voltage, received from an external source, to produce a direct current (DC) voltage. The DC voltage is used as a reference DC voltage 201 for the power supply. The reference DC voltage 201 is used directly, in this example, as the main driving voltage, while also being used for generating an auxiliary driving voltage. The portable printer to which the present invention is applied uses a voltage of +35 V as the main driving voltage and a voltage of +5 V as an auxiliary driving voltage.

The reference DC voltage 201, output from the adapter 200, is +35V when the adapter 200 is connected to an external AC voltage.

The step-down converter 210 receives the reference DC voltage 201, output from the adapter 200, steps down the reference DC voltage 201 by a predetermined ratio, and generates an ancillary driving voltage of +5V. In more detail, the step-down converter 210 steps down the reference DC voltage 201 and generates the ancillary driving voltage of +5V when an external AC voltage is applied. If no external AC voltage is applied, the step-down converter 210 steps down the voltage of a battery 240 (described below) and generates the ancillary driving voltage of +5V.

The step-down converter and charging unit 220 steps down the reference DC voltage 201, received from the adapter 200 when an external AC voltage is applied, and charges the battery 240 using an internal charging circuit.

The step-up converter 230 receives the voltage of the battery 240 when no external AC voltage is applied, steps up the received voltage by a predetermined ratio and generates a main driving voltage of +35V, in this example.

The battery 240 is charged by a charging circuit disposed in the step-down converter and charging unit 220 when an external AC voltage is applied. If no external AC voltage is being applied, the battery 240 can supply a voltage to the step-down converter 210 and the step-up converter 230 to generate the main driving voltage of +35V and the ancillary driving voltage of +5V.

In summary, if the power supply is connected to an external AC voltage, an input voltage is converted to a DC voltage by the adapter 200 and directly output as the +35V main driving voltage and simultaneously the input voltage is stepped down and output to provide the +5V ancillary driving voltage by the step-down converter 210. Also, the input voltage is input into the step-down converter and charging unit 220 to charge the battery 240.

If the power supply is not connected to an external AC voltage, the reference DC voltage is supplied by the battery 240. The voltage output from the battery 214 is stepped down by a predetermined ratio by the step-down converter 210 so that an auxiliary voltage of +5V is generated. Simultaneously, the +35V main driving voltage is generated by the step-up converter 220.

Referring to Figure 3, another power supply for a portable printer, according to the present invention, includes an adapter and charging unit 300, a step-down converter 310, a battery 320, and a step-up converter 330.

This power supply includes a charging unit with a charging function, different from the power supply of Figure 2, thereby potentially achieving an enhanced effect. Generally, the power supply is constructed using components with a voltage margin higher, by about 50 %, than the voltage to be applied to the power supply. Accordingly, by reducing the reference DC voltage, the power supply can perform the same function as the power supply of Figure 2, using low-cost components with lower withstanding voltages. For example, a reference DC voltage of +35V may be used in the embodiment of Figure 2, while a reference DC voltage of +24V may be used in the embodiment of Figure 3.

Referring to Figure 3, the adapter and charging unit 300 rectifies and smoothes an AC voltage (external AC voltage) received from an external source and generates a reference DC voltage 301. The charging unit, disposed in the adapter and charging unit 300, can directly charge the battery. The reference DC voltage 301 is input into the step-down converter 310 and used for generating the auxiliary driving voltage of +5V. Simultaneously, the reference DC voltage is input into the step-up converter 330 and used for generating the +35V main driving voltage.

The step-down converter 310 receives the reference DC voltage 301 from the adapter and charging unit 300 and generates a +5V auxiliary driving voltage when an external AC voltage is applied, and when no external AC voltage is being applied, the step-down converter 310 receives a voltage from the battery 320 and generates the +5V auxiliary driving voltage of +5V.

The battery 320 is charged by the charging unit, included in the adapter and charging unit 310, when an external AC voltage is applied so that the battery 320 can supply its voltage to the step-down converter 310 and the step-up converter 330 to generate the +5V auxiliary driving voltage and the +35V main driving voltage, when no external AC voltage is being applied.

The step-up converter 330 receives the reference DC voltage 301 from the adapter and charging unit 300 and generates a +35V main driving voltage when the external AC voltage is applied. When no external AC voltage is being applied, the step-up converter 330 can generate a +35V main driving voltage using a voltage received from the battery 320.

Compared to the power supply of Figure 2, in the power supply of Figure 3, the reference DC voltage output from the adapter and charging unit 300 can be +24V, which is lower than the main driving voltage of +35V and higher than the voltage of the battery 320. By lowering the reference DC voltage of the power supply, it is possible to construct the power supply using components with lower voltage ratings, thereby reducing the manufacturing costs of the corresponding power supplies.

As described above, according to embodiments of the present invention, it is possible to supply a main driving voltage and an auxiliary driving voltage to a portable printer in correspondence with whether an external voltage is applied.

In particular, by lowering the reference DC voltage of the power supply, it is possible to substitute various circuit devices, included in the power supply, with low-cost components, thereby reducing a cost of the power supply.

## Claims

1. A power supply system for a portable printer, the system comprising a voltage source means (240; 300, 320), **characterised by** voltage step-up means (230; 330) for stepping up the output voltage of the voltage source means (240; 300, 320) and voltage step-down means (210; 310) for stepping down the output voltage of the voltage source means (240; 300, 320).

2. A system according to claim 1, wherein the voltage source means comprises a battery (240; 320).

3. A system according to claim 2, wherein the voltage source means comprises means (300) for producing a DC voltage from an AC voltage.

4. A system according to claim 3, including charging means (300) for charging the battery from the means (300) for producing a DC voltage from an AC voltage.

5. A system according to claim 2, including means (200) for producing a DC voltage from an AC voltage, a further voltage step-down means (220) and a battery charging means (220), wherein the output of the means (200) for producing a DC voltage from an AC voltage is connected to the inputs of both of the voltage step-down means (210, 220) and the further voltage step-down means (220) and the battery charging means (220) are configured for charging said battery (240).

6. A portable printer including a system according to any preceding claim.

7. A power supply system, comprising:
an AC/DC conversion unit generating a reference direct current (DC) voltage from an alternating current (AC) voltage external source;
a step-up unit stepping up the reference DC voltage by a predetermined ratio and generating a first voltage, with the first voltage being a main driving voltage of a portable printer; and
a step-down unit stepping down the reference DC voltage by a predetermined ratio and generating a second voltage, with the second voltage being an auxiliary driving voltage of the portable printer.

8. The power supply system of claim 7, further comprising a power storage unit which applies a voltage for generating the main driving voltage and/or the auxiliary driving voltage, to the step-up unit and the step-down unit, respectively.

9. The power supply system of claim 8, wherein the generating of the main driving voltage and/or the auxiliary driving voltage based on the voltage from the power storage unit occurs upon no alternating current (AC) voltage being applied from the external source.

10. The power supply system of claim 7, wherein the AC/DC conversion unit further comprises a charging unit for charging the power storage unit.

11. The power supply system of claim 8, wherein the power storage unit is comprised in the portable printer.

12. The power supply system of claim 7, wherein the reference DC voltage is lower than the first voltage.

13. A power supply system, comprising:
an AC/DC conversion unit generating a reference direct current (DC) voltage from an alternating current (AC) voltage external source; and
a step-down unit stepping-down the reference DC voltage and generating an auxiliary driving voltage of the portable printer,
wherein the power supply directly provides the reference DC voltage, output from the AC/DC conversion unit, to a corresponding electrical device, separate from the AC/DC conversion unit and the step-down unit, as a corresponding main driving voltage.

14. The power supply of claim 11, further comprising a power storage unit generating the main driving voltage and the auxiliary driving voltage to the step-up unit and the step-down unit, respectively.

15. The power supply system of claim 14, wherein the generating of the main driving voltage and/or the auxiliary driving voltage based on the voltage from the power storage unit occurs upon no alternating current (AC) voltage being applied from the external source.

16. The power supply of claim 12, further comprising a second step-down unit which receives the reference DC voltage from the AC/DC conversion unit, steps down the received reference DC voltage, and provides power to the power storage unit to charge the power storage unit.

17. A method of supplying power, comprising:
supplying a reference voltage from an AC/DC adapter to a step-down converter and generating an auxiliary driving voltage for an electrical device;
supplying a battery voltage from a battery to a step-up unit to generate a main power voltage for the electrical device and supplying the battery with the reference voltage or the reference voltage modified by a step-down converter.

18. The method of claim 17, wherein, when external voltage is available from an external source to the AC/DC adapter, the reference voltage is supplied to the step-up unit to generate the main power voltage.

19. The method of claim 17, wherein, when external voltage is available from an external source to the AC/DC adapter, the reference voltage is supplied as the main power voltage.

20. The method of claim 17, wherein the electrical device is a portable printer and the battery is comprised within the portable printer, which is separate from the AC/DC adapter.

21. The method of claim 17, wherein the main power voltage is 35V.

22. The method of claim 17, wherein the auxiliary power voltage is 5V.
